# EUROPÄISCHE PATENTSCHRIFT

(11) **EP 1 855 286 B1**
(45) Veröffentlichungstag und Bekanntmachung des Hinweises auf die Patenterteilung: **26.11.2008**
(21) Anmeldenummer: 07090085.7
(22) Anmeldetag: 24.04.2007
(51) Int. Cl.: G11B 23/00, G06K 19/077

(54) **Optischer datenträger mit RFID-Label**
Optical data carrier with RFID label
Support de données optique doté d'une étiquette RFID

(30) Priorität: 12.05.2006 DE 102006022636; 26.06.2006 DE 102006029543
(43) Veröffentlichungstag der Anmeldung: 14.11.2007
(60) Teilanmeldung: 08075197.7
(73) Patentinhaber: CDA Datenträger Albrechts GMBH, D-98529 Albrechts (DE)
(72) Erfinder: Scholz, Konrad, D-98587 Steinbach-Hallenberg (DE); Lerche, Volker, D-98554 Benshausen (DE); Wiese, Thürk, 99330 Gräfenroda (DE)
(74) Vertreter: Jungblut, Bernhard Jakob

(56) Entgegenhaltungen:
- EP-A- 1 617 506
- DE-A1- 19 616 819
- US-A- 5 862 117
- US-A1- 2004 255 317

## Beschreibung

### Gebiet der Erfindung.

Die Erfindung betrifft einen optischen Datenträger mit zumindest einem scheibenförmigen Substratbauteil und mit einem RFID Label. Die Erfindung betrifft des weiteren ein Verfahren zur Herstellung eines solchen optischen Datenträgers.

### Stand der Technik und Hintergrund der Erfindung.

Aus der Literaturstelle EP 1302893 A1 ist es bekannt, auf der Oberfläche eines optischen Datenträgers ein RFID Label anzubringen. Das RFID Label ist dabei auf eine planare Oberfläche des Datenträgers im Bereich des Mittelloches angebracht.

Aus der Literaturstelle DE 101 12 899 ist ein RFID Label bekannt, welches zur Anbringung auf einer planaren Oberfläche u.a. eines optischen Datenträgers geeignet ist.

Aus der Literaturstelle WO 00/23994 ist es bekannt ein RFID Label in einen optischen Datenträger einzulaminieren. Das RFID Label ist dabei seitlich neben dem Mittelloch angeordnet. Aus den Literaturstellen US 7,038985 und US 2005/027064 A1 sind ähnliche Datenträger bekannt, wobei offen bleibt, ob das RFID Label eingebaut oder aufgeklebt ist.

Der insofern bekannte Stand der Technik weist mehrere Nachteile auf. Zum Ersten ist problematisch, dass durch die seitliche Anordnung des RFID Labels Maßnahmen vorgesehen sein müssen, um Unwuchten des mit dem Label versehenen Datenträgers zu vermeiden. Da der Datenträger selbst bzw. dessen Substrat keine baulichen Bezugspunkte oder Bezugskanten aufweist, ist dies produktionstechnisch aufwändig. Hinzu kommt, dass das RFID Label nicht nur sichtbar ist, was aus designerischen Gründen stört, sondern vielmehr auch der Gefahr einer Entfernung durch unauthorisierte Personen ausgesetzt ist. Eine solche Person wird lediglich das Label, das typischerweise aufgeklebt ist, mit geeigneten Mitteln ablösen müssen. Nach einer Ablösung ist der Datenträger der Funktion des RFID Labels, beispielsweise als Diebstahlsicherung, entledigt.

Im Zusammenhang mit den vorstehenden Problemen besteht in grundsätzliches Problem des Vertriebs von optischen Datenträgern darin, dass von einem authorisierten, i.e. von einer berechtigten Person in Verkehr gebrachten, Datenträger jedenfalls dann relativ problemlos unauthorisierte Kopien hergestellt werden können, wenn der Datenträger nicht mit einem Kopierschutz ausgestattet ist. Kopierschutze sind in mannigfaltiger Art bekannt, wozu lediglich beispielsweise auf die Literaturstellen EP 1174876 A2, WO 00/21085 A, DE 41 08 249 A, US 5,737286 und US 6,078,552 A verwiesen wird. Diesen Varianten von Kopierschutz ist gemeinsam, dass ein Kopieren durch bestimmten Veränderungen der Datenstrukturen und/oder der physikalischen Strukturen, die für die optisch auslesbare Information codieren, erschwert bzw. verhindert werden soll. Nachteilig bei den insofern bekannten Kopierschutzen ist, dass sie zumindest teilweise durch geeignete Reprogrammierung von Brennern umgangen werden können. Dies ist zwar bei dem Kopierschutz gemäß EP 1174876 nicht möglich, jedoch kann hierbei nicht ausgeschlossen werden, dass durch den Kopierschutz auch das reguläre Abspielen bzw. Auslesen des optischen Datenträgers in einzelnen Geräten behindert und so das Abspielen eines authorisierten Datenträgers in solchen Geräten erschwert wird. Insofern hat sich gezeigt, dass jeder Kopierschutz über Veränderungen der Datenstruktur und/oder der physikalischen Strukturen je nach "Härte" des kopierschutzes entweder umgehbar ist oder zu Störungen beim Abspielen und folglich zu Kundenreklamationen führen kann.

Aus den Literaturstellen DE 19616819, US 2004/255317, US 5,862,117 und EP 1617506 sind optische Datenträger mit einem Ringraum für RFID Bauelemente bekannt.

### Technisches Problem der Erfindung

Der Erfindung liegt daher das technische Problem zu Grunde, einen mit einem RFID Label versehenen optischen Datenträger zur Verfügung zu stellen, bei welchem das RFID Label nicht ohne Weiteres ablösbar und vorzugsweise sogar einer Betrachtungsperson verborgen bleibt.

Der Erfindung liegt des Weiteren das technische Problem zu Grunde, einen optischen Datenträger anzugeben, welcher in Hinblick auf die exakte Positionierung des RFID Labels besonders einfach herstellbar ist und zudem eine zumindest reduzierte Unwucht aufweist.

Der Erfindung liegt schließlich das technische Problem zu Grunde, einen optischen Datenträger zur Verfügung zu stellen, bei welchem ein Kopierschutz unabhängig von den gespeicherten Daten bzw. physikalischen Strukturen, die für Daten codieren, einrichtbar ist, welcher besonders betriebsicher und unauffällig in den Datenträger integrierbar ist.

### Grundzüge der Erfindung und bevorzugte Ausführungsformen.

Zur Lösung dieses technischen Problems lehrt die Erfindung, den Gegenstand des Anspruchs 1. Es versteht sich dabei, dass die Ausnehmung zu einer der beiden Hauptflächen hin offen ist, so dass darin das RFID Label im Zuge der Herstellung eingelegt werden kann.

Dabei kann die ringförmige Ausnehmung innenseitig vor dem Mittelloch enden, dann bleibt zwischen der Ausnehmung und dem Mittelloch ein Steg stehen. Es ist aber auch möglich, dass sich die ringförmige Ausnehmung bis zum Mittelloch hin erstreckt. Dann ist zwischen der Ausnehmung und dem Mittelloch kein verbleibender Steg. Der Begriff der Ringform bezeichnet einen Ring mit coaxialen kreisförmigen Innen- und Außenrändern.

Mit der Erfindung wird zunächst erreicht, dass eine stets zuverlässige Positionierung des RFID Labels erfolgt, da die Position durch die Wandungen der Ausnehmung, entweder sowohl ringinnenseitig und ringaussensseitig, oder nur ringaußenseitig bestimmt ist. Des weiteren wird erreicht, dass ein ringförmiges und an die ringförmige Ausnehmung hinsichtlich der Dimensionen so angepasstes RFID Label eingesetzt werden kann, dass das ringförmige Label genau in die Ausnehmung passt. Durch die erfindungsgemäße ringförmige Ausnehmung mit darin eingesetzten ringförmigem RFID Label ist die Unwucht reduziert.

Im Rahmen der Erfindung kann eine Abdeckung der Ausnehmung mit dem darin angeordneten RFID Label auf die verschiedensten Weisen erfolgen. In einer ersten Variante kann die Ausnehmung und so das eingesetzte RFID Label durch eine Druckschicht abgedeckt sein. Eine Druckschicht bezeichnet eine Farbschicht, welche mittels eines herkömmlichen und in der Bedruckung von Datenträgern üblichen Druckverfahrens, beispielsweise Siebdruck, aufgebracht ist. In dieser Variante erfolgt mittels der Druckschicht auch eine optische Abdeckung der Ausnehmung, so dass eine Betrachtungsperson das RFID Label gar nicht erkennen kann. Zudem wird der designerische Eindruck des Datenträgers durch das RFID Label in keinster Weise beeinträchtigt.

In einer alternativen Variante kann die Ausnehmung und so das eingesetzte RFID Label durch eine Lackschicht abgedeckt sein. Hierzu sind die üblichen Techniken zur Aufbringung von Lacken auf optische Datenträger einsetzbar. Zwar kann als Lack auch ein Klarlack eingesetzt werden, es wird sich aber meist empfehlen, einen nicht-transparent pigmentierten Lack zu verwenden, welcher einen Einblick in die Ausnehmung und so auf das RFID Label verhindert.

In einer weiterhin alternativen Variante kann die Ausnehmung und so das RFID Label durch eine Folie abgedeckt sein. Hierfür kommen grundsätzlich alle üblichen Folien auf Basis von Polymerwerkstoffen und mit Schichtdicken von 0,1 bis 10 µm und mehr in Frage. Bei der Folie kann es sich um eine Klebefolie handeln, i.e. eine Seite der Folie trägt ein Adhäsiv. Es ist aber auch möglich, dass ein Adhäsiv auf das Substratbauteil mit eingelegtem RFID Label aufgebracht ist und die Folie dann auf die Adhäsivschicht aufgelegt und angeklebt wird. Die Folie kann transparent sein, vorzugsweise ist die Folie jedoch entweder in sich gefärbt und nicht transparent und/oder mit einer Druckschicht versehen.

In einer weiterhin alternativen Variante kann die Ausnehmung und so das RFID Label durch ein zweites scheibenförmiges Substratbauteil abgedeckt sein. Diese Variante ist insbesondere bei solchen optischen Datenträgern geeignet, die auf Grund der Anordnung der physikalischen Strukturen, welche für die Daten codieren, ohnehin aus zwei (oder mehr) scheibenförmigen Substratbauteilen, die miteinander fluchtend flächig verklebt werden, bestehen. Beispiele hierfür sind DVDs. Es ist aber auch möglich, dass die ringförmige Ausnehmung im Falle von solchen Datenträgern außenseitig auf einem der Substratbauteile angeordnet ist, dann besteht in Hinblick auf den Aufbau grundsätzlich kein Unterschied zwischen Datenträgern mit einem oder mit zwei Substratbauteilen.

Im Falle von optischen Datenträgern, welche aus mehr als einem scheibenförmigen Substratbauteil gebildet sind, ist es aber auch möglich, dass die Ausnehmung in einer Außenfläche eines außenliegenden Substratbauteils angeordnet ist, wie es bei optischen Datenträgern mit nur einem einzigen Substratbauteil (beispielsweise CD) ohnehin gegeben ist. Dann finden die vorstehenden Ausführungen zur Abdeckung der Ausnehmung entsprechend Anwendung.

Vorzugsweise ist das RFID Label in der Ausnehmung eingeklebt. Hierzu können im einfachsten Falle selbstklebende RFID Labels, wie sie käuflich erwerbbar sind, eingesetzt werden. Dabei handelt es sich um im Wesentlichen flächige Elemente, die auf einer Seite ein Adhäsiv tragen. Dann kann das RFID Label einfach in die Ausnehmung eingelegt und angedrückt werden. Alternativ ist es möglich, dass zumindest die Grundfläche der Ausnehmung mit einer Adhäsivschicht beschichtet wird und dann das RFID Label eingelegt und angedrückt wird. Grundsätzlich ist es aber auch möglich, das RFID Label in der Ausnehmung dadurch zu fixieren, dass die Ausnehmung mit dem darin angeordneten Label mit einer Vergussmasse, typischerweise aus einem organischen Polymer, vergossen wird. Dies kann unabhängig davon erfolgen, ob das RFID Label in der Ausnehmung verklebt ist oder nicht.

Die Ausnehmung wird typischerweise eine Mittelachse, in Richtung orthogonal zur Hauptfläche des Substratbauteils, aufweisen und die coaxial zur Zentralachse des Mittelloches des Substratbauteils angeordnet ist.

In einer Ausführungsform, bei welcher kein Steg zwischen der Ausnehmung und dem Mittelloch verbleibt, wird das RFID Label ein Labelmittelloch aufweisen, wobei das Labelmittelloch bei in die Ausnehmung eingelegtem RFID Label vorzugsweise, aber nicht zwingend, mit dem Mittelloch des Substratbauteils fluchtet. Der Durchmesser des Labelmitteloches ist zumindest so groß wie der Durchmesser des Mittelloches des Substratbauteiles. In der Ausführungsform mit Steg zwischen der Ausnehmung und dem Mittelloch ist der Durchmesser des Labelmitteloches zumindest so groß, wie der Innendurchmesser der ringförmigen Ausnehmung.

Der Innendurchmesser der ringförmigen Ausnehmung kann im Bereich von 15 oder 16 bis 22 mm liegen. Der Außendurchmesser der ringförmigen Ausnehmung kann im Bereich von 20 bis 50 mm, beispielsweise 30 bis 35 mm, liegen.

Die Form der Grundfläche kann dem Querschnitt des RFID Labels angepaßt sein. Da der Chip des RFID Labels dicker als jener Bereich des Labels, welcher die Antenne trägt, ist und folglich auf einer Seite des RFID Labels hervorragt, ist es erfindungsgemäß vorgesehen, dass für den über die Oberfläche des Trägers des RFID Labels hervorragenden Teil des Chips eine komplementäre Zusatzausnehmung in der Grundfläche vorgesehen ist. Mit anderen Worten ausgedrückt, die Grundfläche der Ausnehmung ist einer von einer im wesentlichen planen Ebene abweichenden Topographie einer Hauptfläche des RFID Labels komplementär angepaßt. Vorzugsweise wird eine plane Hauptfläche des RFID Labels der Grundfläche der Ausnehmung gegenüber liegen, so daß bei in die Ausnehmung eingelegtem RFID Chip eine im wesentlichen plane Oberfläche auch im Bereich der Ausnehmung entsteht. Dann kann die Ausnehmung aufweisende Hauptfläche des Substratbauteils beispielsweise durchgehend bedruckt werden. Eine solche Zusatzausnehmung kann im übrigen auch unabhängig von den vorstehenden Ausführungen zur Auswuchtung des mit dem RFID Label versehenen Substratbauteils bzw. des Datenträgers insgesamt genutzt werden. Dann wird die Zusatzausnehmung mit der Maßgabe eingerichtet, positioniert und dimensioniert, dass Lagerkräfte im Betrieb des Datenträgers minimiert werden. Mittels der Zusatzausnehmung kann also auch eine ggf. durch das eingelegte RFID entstandene bzw. zu erwartende Unwucht praktisch vollständig kompensiert werden.

Die Seitenwandungen der Ausnehmung können ebenfalls grundsätzlich beliebig sein, beispielsweise nach Maßgabe der Umfangsform des RFID Labels. Bevorzugt ist es jedoch, wenn die Seitenwandungen als Zylinderinnenfläche ausgebildet sind.

Vorzugsweise weist die Ausnehmung einen (Außen-) Durchmesser im Bereich von 20 bis 50 mm auf. Der Durchmesser wird typischerweise im Bereich des 1,3- bis 4-fachen, vorzugsweise des 1,5- bis 3-fachen, des Durchmessers des Mittelloches des Substratbauteiles liegen. Der Innendurchmesser der Ausnehmung kann zumindest 1 mm über dem Durchmesser des Mittelloches des Substratbauteils liegen bzw. zumindest das 1,05-fache bis 1,5-fache des Mittelloches betragen. Die Tiefe der Ausnehmung kann im Bereich von 0,1 bis 1 mm, vorzugsweise 0,2 bis 0,8 mm, liegen. Im Allgemeinen wird die Tiefe der Ausnehmung zwischen dem 0,1- und 0,9-fachen, vorzugsweise 0,2- bis 0,7-fachen, der Dicke des Substratbauteiles liegen.

Als optische Datenträger mit einem erfindungsgemäß integrierten RFID Label kommen insbesondere CDs, CDRs, DVDs, DVDRs, Blu-Ray Discs, HD-DVD, oder HD-Discs in Frage. Daten können im Rahmen der Erfindung beliebige gespeicherte Informationen sein. Es kann sich dabei um Zeichenfolgen, codierte Toninformationen, codierte Textinformationen und/oder codierte Bildinformationen handeln.

Geeignete RFID Labels bzw. Transponder/Transponderantennen sind beispielsweise in der Literaturstelle EP 1302893 A1 beschrieben. Grundsätzlich lassen sich alle RFID Labels bzw. Transponder/Transponderantennen einsetzen, die den geometrischen Anforderungen genügen, i.e. in die ringförmige Ausnehmung eingelegt werden können.

Die Erfindung betrifft des Weiteren ein Verfahren gemäß Anspruch 7.

Dabei kann die Ausnehmung in das Substratbauteil im Zuge des Spritzgussprozesses zur Herstellung des Substratbauteils eingebracht werden. Hierfür ist es lediglich erforderlich, ein entsprechend angepaßtes Formwerkzeug einzusetzen. Es ist aber grundsätzlich auch möglich, zuerst das Substratbauteil in üblicher Weise herzustellen und erst danach die ringförmige Ausnehmung, beispielsweise durch Fräsen, einzubringen. Es versteht sich in jedem Falle, dass die Ausnehmung nur in einem Bereich eingebracht wird, die nicht im weiteren Prozess durch beispielsweise Besputtern mit einer Metallschicht ausgestattet wird, die letztendlich die Informationen tragen wird. Dies ist beispielsweise der Bereich um das Mittelloch. Mit Ausnahme der Einbringung der ringförmigen Ausnehmung und dem Einbringen und Fixieren des RFID Labels entspricht der gesamte Herstellungsprozeß ansonsten den üblichen Verfahren, die dem Durchschnittsfachmann gut vertraut und folglich hier nicht näher erläutert werden brauchen.

Vorzugsweise wird das RFID Label in der ringförmigen Ausnehmung durch Einkleben fixiert, sei es durch Einsatz eines selbstklebenden RFID Labels oder durch Einbringung einer Klebstoffschicht in den Grund der Ausnehmung. Es gelten die vorstehend zum erfindungsgemäßen Datenträger getroffenen Anmerkungen analog.

Weiterhin vorzugsweise wird die ringförmige Ausnehmung nach der Fixierung des RFID Labels in der Ausnehmung abgedeckt, insbesondere mittels einer Lackschicht, einer Druckschicht und/oder einer Klebefolie. Es versteht sich, dass die Lackschicht, Druckschicht und/oder Klebefolie so dimensioniert und angeordnet ist, dass eine Auslesung der gespeicherten Informationen nicht behindert wird. Die Lackschicht, Druckschicht oder Klebefolie wird in der Regeln zumindest den (Außen-) Durchmesser der ringförmigen Ausnehmung haben, typischerweise jedoch einen Durchmesser von zumindest dem 1,1-fachen des (Außen-) Durchmessers der ringförmigen Ausnehmung.

Im Rahmen der Herstellung eines erfindungsgemäßen optischen Datenträgers ist es aber auch möglich, verschiedene Komponenten des RFID Labels in verschiedenen Schritten einzubringen. So kann eine Antenne beispielsweise in einer Druckverfahrensstufe in die ringförmige Ausnehmung eingebracht werden, während der RFID Chip in die Ausnehmung so eingelegt wird, dass Antennenkontakte des Chips mit der Antenne kontaktiert werden. Dabei ist die Reihenfolge, Druck Antenne/Einlegen Chip oder Einlegen Chip/Druck Antenne grundsätzlich beliebig. Anstelle des Druckes der Antenne sind auch beliebige andere fachübliche Methoden der Bildung einer RFID Antenne möglich. In dieser Variante eines Herstellungsverfahrens wird der freie Ringraum der Ausnehmung nach Einbringung des RFID Labels bzw. dessen Komponenten zweckmäßigerweise verfüllt, beispielsweise vergossen.

Eine vorteilhafte Weiterbildung der Erfindung ist dadurch gekennzeichnet, dass das RFID Label eine einzigartige Identzeichenfolge, welche für verschiedene Datenträger verschieden ist, in einem Speicherelement gespeichert enthält, wobei die Identzeichenfolge mit einer RFID-Ausleseeinheit aus dem RFID Label auslesbar ist.

Eine Identzeichenfolge ist einzigartig, wenn für eine geschlossene Gruppe von Datenträgern jedem Datenträger eine andere Zeichenfolge zugeordnet ist. Eine geschlossene Gruppe von Datenträgern kann beispielsweise durch einen Datenträgertyp, wie vorstehend gelistet, gebildet sein. Bevorzugt ist es, wenn die Identzeichenfolge einzigartig in dem Sinne ist, dass kein zweites RFID Label existiert, jedenfalls innerhalb eines Datenträgertyps, welches die gleiche Identzeichenfolge eingespeichert enthält. Dann kann die Identzeichenfolge beispielsweise eine UID-Nummer sein.

Im Rahmen dieser Variante sind verschiedene Verfahren zur Überprüfung, zum Abspielen und/oder zum Kopieren eines erfindungsgemäßen optischen Datenträgers möglich. Diese Verfahren stellen Verwendungen des erfindungsgemäßen Datenträgers dar, deren Gemeinsamkeit die Auslesung bzw. versuchte Auslesung der Identzeichenfolge ist. Diese verschiedenen Verfahren werden folgend im Einzelnen beschrieben.

Bei einem Verfahren zur Überprüfung der Originalität eines erfindungsgemäßen optischen Datenträgers wird der Datenträger einer RFID-Ausleseeinheit zugeführt, wobei mittels der RFID-Ausleseeinheit ein Verfahrensschritt zur Auslesung der Identzeichenfolge durchgeführt wird, wobei entweder bei erfolglosem Verfahrensschritt zur Auslesung einer Zeichenfolge, oder bei Auslesung einer Zeichenfolge, die eine nicht Identzeichenfolgenorm-konforme Zeichenfolge aufweist, oder bei Auslesung einer Zeichenfolge, die eine Identzeichenfolge ist, jedoch bei Vergleich der ausgelesenen Identzeichenfolge mit in einem an die RFID-Ausleseeinheit angeschlossenen Zentralspeicher gespeicherten registrierten Identzeichenfolgen, als nicht registriert identifiziert wird, eine Warnmeldung zur Anzeige eines nicht-originalen Datenträgers aktiviert und/oder eine Steuerfunktion zur Inhibierung eines Auslesens der Daten des Datenträgers aktiviert wird. In diesem Verfahren kann mit einer RFID Ausleseeinheit gearbeitet werden, die unabhängig von einer optischen Ausleseeinheit funktioniert. Gleichsam off-line kann die Authentizität des Datenträgers zumindest einer ersten Prüfung, auch automatisiert, unterzogen werden. Nichtoriginale Datenträger können dann von einer Bedienperson der RFID Ausleseeinheit sofort beschlagnahmt werden. Insgesamt wird eine hohe Sicherheit erreicht, da Fälscher in der Regel den Aufwand des Einbaus eines RFID-Labels scheuen werden, zumal RFID-Label mit geeigneten Datenstrukturen (Identzeichenfolge) nicht ohne weiteres verfügbar sind.

Bei dem Verfahren zum Auslesen eines erfindungsgemäßen optischen Datenträgers wird der optische Datenträger in ein Datenträgerauslesegerät eingelegt, wobei mittels einer im Abspielgerät eingerichteten RFID-Ausleseeinheit die Identzeichenfolge aus dem RFID Label ausgelesen wird, wobei entweder bei erfolglosem Verfahrensschritt zur Auslesung einer Zeichenfolge, oder bei Auslesung einer Zeichenfolge, die eine nicht Identzeichenfolgenorm-konforme Zeichenfolge aufweist, oder bei Auslesung einer Zeichenfolge, die eine Identzeichenfolge ist, jedoch bei Vergleich der ausgelesenen Identzeichenfolge mit einer in einem an die RFID-Ausleseeinheit angeschlossenen Zentralspeicher gespeicherten registrierten Identzeichenfolgen, als nicht registriert identifiziert wird, eine Inhibierung eines Auslesens der Daten des Datenträgers aktiviert und ansonsten ein Auslesen der Daten des Datenträgers initiiert wird. Mit anderen Worten ausgedrückt, es wird ein Abspielgerät verwendet, welches eine RFID-Ausleseinheit enthält, wobei mittels der RFID-Ausleseeinheit die Überprüfung der Datenträgers erfolgt, und wobei ein Abspielen nur bei authentischem Datenträger angesteuert werden kann.

Ein Verfahren zum Kopieren eines optischen Datenträgers ist auch Bestandteil der Erfindung, da in manchen Ländern ein bestimmte Anzahl von privaten Kopien zuzulassen ist. Bei diesem Verfahren wird der Datenträger in eine Kopiervorrichtung, beispielsweise einen computergesteuerten Brenner, welche eine RFID-Ausleseeinheit enthält, eingelegt wird, wobei die Kopiervorrichtung einen an die RFID-Ausleseeinheit angeschlossenen Prozessor mit einem Speicher aufweist, in welchem, einer gespeicherten Identzeichenfolge zugordnet, eine Anzahl von Kopiervorgängen speicherbar ist, wobei mittels der RFID-Ausleseeinheit die Identzeichenfolge aus dem Datenträger ausgelesen wird, wobei die ausgelesene Identzeichenfolge mit gespeicherten Identzeichenfolgen verglichen wird, wobei bei positivem Vergleich die der Identzeichenfolge zuordnete Anzahl von Kopiervorgängen mit einer maximalen Anzahl von Kopiervorgängen verglichen wird, wobei bei Überschreiten der maximalen Anzahl von Kopiervorgängen ein Kopiervorgang inhibiert wird, wobei bei Unterschreiten der maximalen Anzahl von Kopiervorgängen die gespeicherte Anzahl von Kopiervorgängen um 1 erhöht und der Kopiervorgang initialisiert wird, wobei bei negativem Vergleich die Identzeichenfolge gespeichert und der Identzeichenfolge eine Anzahl von Kopiervorgängen von 1 zugeordnet und der Kopiervorgang initialisiert wird. Mit anderen Worten ausgedrückt, die Kopiervorrichtung prüft zunächst, ob auf ihr bereits eine Kopie erstellt wurde. Falls nicht, wird die Identzeichenfolge gespeichert und ein Kopieanzahl "1" zugeordnet. Bei jedem weiteren Kopiervorgang desselben Datenträgers wird die Anzahl inkrementiert, bis zur maximal zulässigen Anzahl an Kopiervorgängen. Nach Erreichen der maximalen Anzahl an Kopiervorgängen wird jeder weitere Kopierversuch unterbunden. Die jeweils aktuelle verbleibenden erlaubte Kopieanzahl kann auch in dem RFID Label durch Übertragung von der Kopiervorrichtung gespeichert werden. Dann wird bei einem weiteren Kopiervorgang diese Größe ausgelesen und wie vorstehend beschrieben verarbeitet.

Im Folgenden wird die Erfindung anhand von lediglich Ausführungbeispielen darstellenden Figuren näher erläutert. Es zeigen:
- Figur 1:: einen Querschnitt durch eine erfindungsgemäße CD,
- Figur 2:: eine Aufsicht auf den Gegenstand der Figur 1,
- Figur 3:: einen Querschnitt durch eine erfindungsgemäße DVD 18,
- Figur 4:: einen Querschnitt durch eine Variante des Gegenstandes der Figur 3, und
- Figur 5:: eine schematische Darstellung eines erfindungsgemäßen Gerätes zu Auslesung und/oder zum Kopieren eine erfindungsgemäßen optischen Datenträgers.

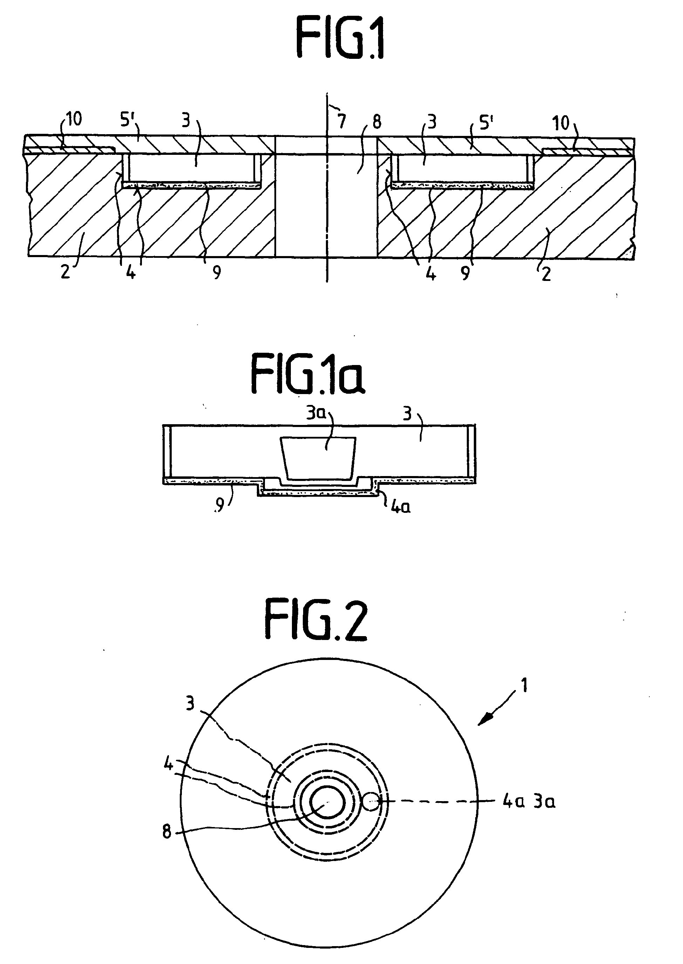

In der Figur 1 erkennt man einen erfindungsgemäßen Datenträger 1, beispielsweise eine CD 1, welcher aus einem einzigen scheibenförmigen Substratbauteil 2 gebildet ist. Aus einer vergleichenden Betrachtung der Figuren 1 und 2 ist entnehmbar, dass das Substratbauteil 2 eine sich orthogonal zu einer Hauptfläche des Substratbauteils 2 erstreckende, in der Aufsicht der Figur 2 kreisringförmige Ausnehmung 4 aufweist, in welche das ebenfalls kreisringförmige und exakt in die Ausnehmung passende RFID Label 3 eingelegt und hierin fixiert ist. Wiederum der Figur 1 ist zu entnehmen, dass das RFID Label 3 mittels einer Klebstoffschicht 9, welche zwischen RFID Label 3 und dem Grund der Ausnehmung 4 angeordnet ist, in der Ausnehmung 4 befestigt ist. Nicht dargestellt ist, dass das RFID Label 3 einen Speicher enthält, in welchem eine Identzeichenfolge gespeichert ist. Der Speicher ist in üblicher Weise mit den an sich bekannten weiteren Schaltkreisen des RFID Labels 3 verbunden, welche zur Aussendung eines Signals, das als Information die Identzeichenfolge enthält, eingerichtet ist.

Die Dicke des RFID Labels 3 (einschließlich Klebstoffschicht 9) entspricht der Tiefe der Ausnehmung 4. In der Detailansicht der Fig. 1a erkennt man, dass des Weiteren im Rahmen der Ausnehmung 4 eine Zusatzausnehmung 4a eingerichtet ist. Das RFID Label 3 wird dabei in die Ausnehmung 4 so eingelegt, dass der Chip 3a in der Zusatzausnehmung 4a zum Liegen kommt. Dabei ist die Zusatzausnehmung 4a so dimensioniert, dass das Trägheitsmoment des Chips 3a durch das in der Zusatzausnehmung 4a fehlende Substratmaterial kompensiert wird, i.e. der Datenträger trotz des exzentrisch angeordneten Chips 3a ausgewuchtet ist. Aufgrund der Dichten des Chips 3a einerseits und des Substratmaterials andererseits wird die Zusatzausnehmung 4a in der Regel ein Volumen haben, welches höher als das Volumen des über die Oberfläche des RFID hinausragenden Teils des Chips 3a ist.

Da die in der Darstellung der Figuren 1 und 1a obenliegende Oberfläche bzw. freie Oberfläche des RFID Labels 3 plan ist, und wegen der Gestaltung der Zusatzausnehmung ist die freie Oberfläche bündig mit der Oberfläche des Substratbauteils 2. Auf diese Seite der CD 1 ist eine (nicht transparente) Druckschicht 5' vollflächig aufgebracht. Dadurch ist das RFID Label 3 jedenfalls von der Seite der CD 1 mit der Druckschicht 5*'* nicht erkennbar. Die Druckschicht erstreckt sich auch über die die Informationen tragenden Metallschicht 10. Soll das RFID Label auch von der der Metallschicht 10 gegenüberliegenden Seite unsichtbar sein, so kann beispielsweise der Grund der Ausnehmung 4 mit einer nichttransparenten (nicht dargestellten) Farbschicht versehen sein, oder es kann ein nicht-transparenter Kleber für die Klebstoffschicht 9 verwendet werden. Auch kann auf der Seite, welche der die Metallschicht 10 tragenden Seite gegenüberliegt, des Substratbauteils 2, von welcher eine Auslesung der Information durch das Substratbauteil 2 hindurch erfolgt, im Innenbereich ein (nicht dargestellter) Aufdruck eingerichtet sein. Der maximale Durchmesser eines solchen Aufdruckes muß jedoch kleiner als der kleinste Durchmesser des mit Informationen versehenen Bereiches der Metallschicht 10 sein, um die Auslesung nicht zu stören. An Stelle eines Aufdruckes oder zusätzlich hierzu kann natürlich auch eine nicht-transparente Farbschicht und/oder ein nicht-transparenter Aufkleber eingerichtet sein.

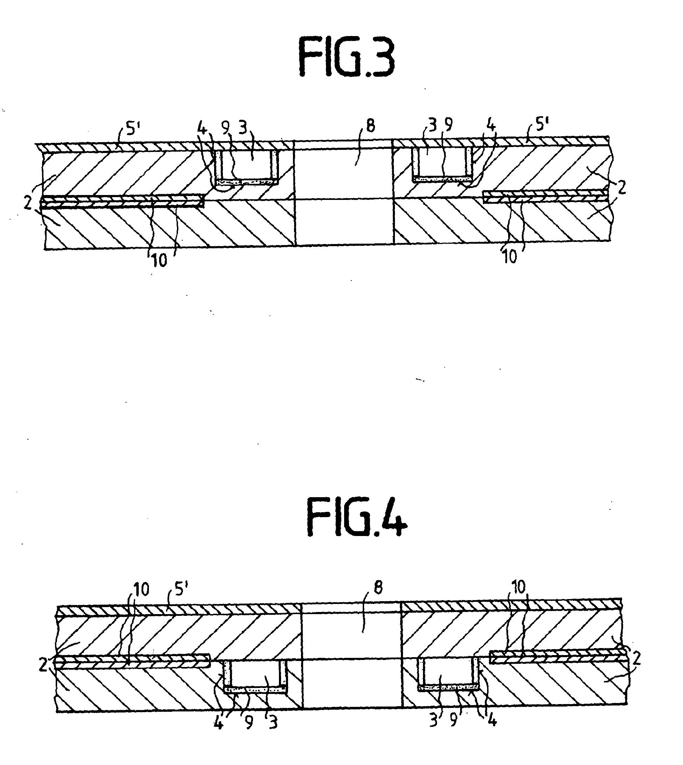

In der Figur 3 erkennt man einen erfindungsgemäßen Datenträger 1, beispielsweise eine erfindungsgemäße DVD-9 1, welcher aus zwei Substratbauteilen 2 gebildet ist. Dabei sind beide Substratbauteile 2 vollflächig miteinander verbunden und die Ausnehmung 4 ist auf einer außenliegenden Seite eines der beiden Substratbauteile 2 angeordnet. Da eine DVD 18 1 von beiden Seiten auslesbar sein muß, darf der Durchmesser der Ausnehmung 4 nicht größer als der kleinste Durchmesser einer Metallschicht 10 sein. Die Abdeckung 5, 5', 5" ist in Bereichen oberhalb der Metallschichten 10 transparent, damit eine Auslesung der Informationen aus der Metallschicht 10 auch von der die Abdeckung 5, 5', 5" tragenden Seite möglich ist. Innerhalb des kleinsten Durchmessers der Metallschicht 10 ist die Abdeckung 5, 5', 5" demgegenüber nicht transparent, so dass das RFID Label 3 von dieser Seite nicht sichtbar ist. Der Übersichtlichkeit halber nicht dargestellt ist, dass auf der gegenüberliegenden Seite des Datenträgers 1 ebenfalls eine nicht-transparente Schicht angebracht sein kann, wobei deren größter Durchmesser kleiner als der kleinste Durchmesser des mit Informationen versehenen Bereiches der darunterliegenden Metallschicht 10 ist, damit die Auslesung auch von dieser Seite nicht beeinträchtigt wird. Ansonsten treffen die vorstehenden Erläuterungen analog zu.

In der Figur 4 ist eine Variante eines erfindungsgemäßen Datenträgers 1 aus zwei Substratbauteilen 2 dargestellt. Dabei ist die Ausnehmung 4 mit dem RFID Label in einem der Substratbauteile 2 durch das andere Substratbauteil abgedeckt. Ansonsten entspricht der Aufbau jenem der Figur 3.

Ein Verfahren zur Überprüfung der Originalität eines optischen Datenträgers (1) erfolgt dadurch, dass der Datenträger (1) einer nicht dargestellten einer stationären und vorzugsweise automatisierten oder auch manuell zu bediendenen RFID-Ausleseeinheit, beispielsweise zur Mitführung von polizeilichen oder sonstigen Kontrollpersonen, zugeführt wird, wobei mittels der RFID-Ausleseeinheit ein Verfahrensschritt zur Auslesung der Identzeichenfolge durchgeführt wird. Wird überhaupt keine Zeichenfolge ausgelesen, so ist der Datenträger (1) sofort als unauthorisiert identifiziert. Wird eine Zeichenfolge ausgelesen, weist diese jedoch eine nicht Identzeichenfolgenorm-konforme Zeichenfolge auf, beispielsweise unzutreffende Zeichenanzahl, Verwendung nicht zulässiger Zeichen, Fehlen von definierten Zeichenfolgen, usw., so kann durch Vergleich mit in der RFID-Ausleseeinheit gespeicherten Regeln für Identzeichenfolgenormen die nicht-Originalität festgestellt werden. Schließlich ist es möglich, dass die RFID-Ausleseeinheit mit einem Zentralspeicher verbunden ist, in welchem registrierte Identzeichenfolgen gespeichert sind. Bei Auslesung einer Zeichenfolge, die eine Identzeichenfolge ist, jedoch bei Vergleich der ausgelesenen Identzeichenfolge mit den gespeicherten registrierten Identzeichenfolgen, als nicht registriert identifiziert wird, kann wiederum die nicht-Originalität festgestellt werden.

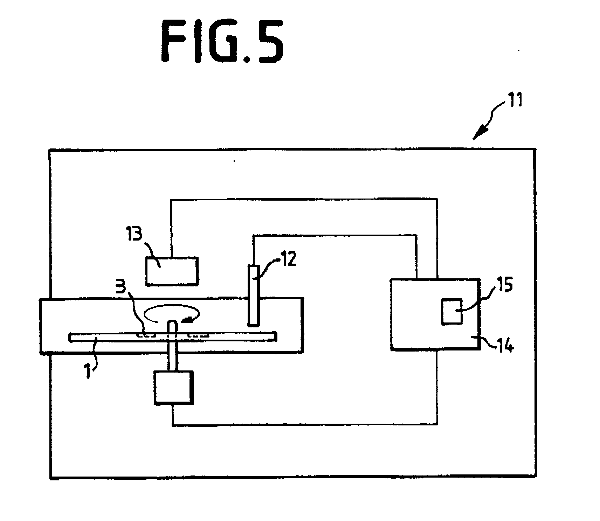

In der Figur 5 ist schließlich ein für einen erfindungsgemäßen Datenträger 1 geeignetes Auslesegerät 11 bzw. Kopiergerät 11 dargestellt. Dieses umfasst eine optische Ausleseeinheit 12, die in üblicher Weise zur Auslesung der optisch gespeicherten Informationen des Datenträgers 1 ausgebildet ist. Des Weiteren ist eine RFID-Auleseeinheit 13 eingerichtet. Die RFID-Ausleseeinheit 13 und die Ausleseeinheit 12 sind an einen Prozessor 14 angeschlossen. die Ausleseeinheit 12 kann von dem Prozessor 14 aktiviert werden und der Prozessor 14 wandelt dann die von der Ausleseeinheit 12 dem Prozessor 14 zugeführten Signale in üblicher Weise in eine gewünschte Wiedergabeform um. Die RFID Ausleseeinheit 13 ist so positioniert, dass eine Auslesung des RFID-Labels 3 in einer Position des Datenträgers 3 möglich ist, in welcher die Ausleseeinheit 12 normalerweise operativ ist. Der Prozessor 14 enthält in einem Speicher 15 ein Betriebsprogramm, welches für ein im allgemeinen Teil der Beschreibung erläutertes Verfahren codiert. Im Speicher 15 sind auch die für das Betriebsprogramm benötigten Daten gespeichert.

## Patentansprüche

1. Optischer Datenträger (1) mit zumindest einem scheibenförmigen Substratbauteil (2) und mit einem RFID Label (3), wobei das Substratbauteil (2) eine sich orthogonal zu einer Hauptfläche des Substratbauteils (2) erstreckende ringförmige Ausnehmung (4) aufweist, undwobei das RFID Label (3) in die ringförmige Ausnehmung (4) eingelegt und hierin fixiert ist,
**dadurch gekennzeichnet,**
**dass** in einer Grundfläche der ringförmigen Ausnehmung (4) eine Zusatzausnehmung (4a) angeordnet ist, in welcher ein über eine Oberfläche des RFID Labels (3) herausragender Teil eines Chips (3a) des RFID Labels (3) angeordnet ist.

2. Optischer Datenträger (1) nach Anspruch 1, **dadurch gekennzeichnet, dass** die ringförmige Ausnehmung (4) mit dem darin eingelegten RFID Label (3) mit einem zweiten scheibenförmigen Substratbauteil (2') abgedeckt ist.

3. Optischer Datenträger (1) nach Anspruch 1, **dadurch gekennzeichnet, dass** die ringförmige Ausnehmung (4) mit dem darin eingelegten RFID Label (3) durch eine Lackschicht (5), durch eine Druckschicht (5') und/oder durch eine Folie (5'') abgedeckt ist.

4. Optischer Datenträger (1) nach einem der Ansprüche 1 bis 3, **dadurch gekennzeichnet, dass** die ringförmige Ausnehmung (4) eine Mittelachse (6), in Richtung orthogonal zur Hauptfläche des Substratbauteils (2), aufweist und die Mittelachse (6) coaxial zur Zentralachse (7) eines Mittelloches (8) des Substratbauteils (2) angeordnet ist.

5. Optischer Datenträger (1) nach einem der Ansprüche 1 bis 4, **dadurch gekennzeichnet, dass** das RFID Label (3) in der ringförmigen Ausnehmung (4) mittels einer Klebstoffschicht (9) fixiert ist.

6. Optischer Datenträger (1) nach einem der Ansprüche 1 bis 4 in der Ausführungsform als CD, CDR, DVD, DVDR, Blu-Ray Disc, HD-DVD, oder HD-Disc.

7. Optischer Datenträger (1) nach einem der Ansprüche 1 bis 6, **dadurch gekennzeichnet, dass** das RFID Label (3) eine einzigartige Identzeichenfolge, welche für verschiedene Datenträger (1) verschieden ist, in einem Speicherelement gespeichert enthält, wobei die Identzeichenfolge mit einer RFID-Ausleseeinheit aus dem RFID Label (3) auslesbar ist, wobei die Identzeichenfolge vorzugsweise eine UID-Nummer ist.

8. Verfahren zur Herstellung eines optischen Datenträgers (1) nach einem der Ansprüche 1 bis 5, wobei in ein scheibenförmiges Substratbauteil (2) eine ringförmige Ausnehmung (4) sowie eine Zusatzausnehmung (4a) eingebracht werden und in der ringförmigen Ausnehmung (4) ein RFID Label (3) mit der Maßgabe fixiert wird, dass ein über eine Oberfläche des RFID Labels (3) herausragender Teil eines Chips (3a) des RFID Labels (3)in der Zusatzausnehmung (4a) angeordnet ist.

9. Verfahren nach Anspruch 8, wobei das RFID Label (3) in der ringförmigen Ausnehmung (4) eingeklebt wird.

10. Verfahren nach Anspruch 7 oder 8, wobei die ringförmige Ausnehmung (4) nach der Fixierung des RFID Labels (3) in der Ausnehmung (4) abgedeckt wird, insbesondere mittels einer Lackschicht (5), einer Druckschicht (5') und/oder einer Klebefolie (5''), abgedeckt wird.

## Claims

1. An optical data carrier (1) comprising at least one disc-shaped substrate component (2) and an RFID label (3), the substrate component (2) having an annular recess (4) extending orthogonally to a main face of the substrate component (2), and the RFID label (3) being inserted into the annular recess (4) and fixed therein,
**characterized by**
that an additional recess (4a) is arranged in a base area of the annular recess (4), in said additional recess (4a) a portion of a chip (3a) of the RFID label (3) being arranged, said portion projecting beyond a surface of the RFID label (3) .

2. The optical data carrier (1) according to claim 1, **characterized by** that the annular recess (4) with the inserted RFID label (3) is covered by a second disc-shaped substrate component (2').

3. The optical data carrier (1) according to claim 1, **characterized by** that the annular recess (4) with the inserted RFID label (3) is covered by a paint layer (5), by a printed layer (5') and/or by a film (5").

4. The optical data carrier (1) according to one of claims 1 to 3, **characterized by** that the annular recess (4) has a central axis (6), in the direction orthogonally to the main face of the substrate component (2), and that the central axis (6) is arranged coaxially to the central axis (7) of a central hole (8) of the substrate component (2).

5. The optical data carrier (1) according to one of claims 1 to 4, **characterized by** that the RFID label (3) is fixed in the annular recess (4) by means of an adhesive layer (9).

6. The optical data carrier (1) according to one of claims 1 to 4 in the embodiment as a CD, CDR, DVD, DVDR, Blu-ray disc, HD-DVD, or HD-Disc.

7. The optical data carrier (1) according to one of claims 1 to 6, **characterized by** that the RFID label (3) comprises a unique sequence of identification symbols, which is different for different data carriers (1), stored in a memory element, the sequence of identification symbols being readable by an RFID readout unit from the RFID label (3), the sequence of identification symbols preferably being a UID number.

8. A method for producing an optical data carrier (1) according to one of claims 1 to 5, wherein an annular recess (4) and an additional recess (4a) are provided in a disc-shaped substrate component (2), and an RFID label (3) is fixed in the annular recess (4) such that a portion of a chip (3a) of the RFID label (3) is arranged in the additional recess (4a), said portion projecting beyond a surface of the RFID label (3).

9. The method according to claim 8, wherein the RFID label (3) is glued into the annular recess (4).

10. The method according to claim 7 or 8, wherein after the fixation of the RFID label (3) in the annular recess (4), the recess (4) is covered, in particular by means of a paint layer (5), a printed layer (5') and/or an adhesive film (5").

## Revendications

1. Support optique de données (1) comprenant au moins un composant de substrat (2) en forme de disque et une étiquette RFID (3), le composant de substrat (2) ayant un évidement annulaire (4) s'étendant orthogonalement à une face principale du composant de substrat (2), et l'étiquette RFID (3) étant insérée dans l'évidement annulaire (4) et fixée là-dedans,
**caractérisé en ce**
**qu'**un évidement additionnel (4a) est arrangé dans une face de base de l'évidement annulaire (4), dans lequel une partie d'une puce (3a) de l'étiquette RFID (3) est arrangée, ladite partie faisant saillie au-delà d'une surface de l'étiquette RFID (3).

2. Support optique de données (1) selon la revendication 1, **caractérisé en ce que** l'évidement annulaire (4) avec l'étiquette RFID (3) insérée là-dedans est recouvert d'un deuxième composant de substrat en forme de disque (2').

3. Support optique de données (1) selon la revendication 1, **caractérisé en ce que** l'évidement annulaire (4) avec l'étiquette RFID (3) insérée là-dedans est recouvert d'une couche de vernis (5), d'une couche d'impression (5') et/ou d'un film (5").

4. Support optique de données (1) selon une des revendications 1 à 3, **caractérisé en ce que** l'évidement annulaire (4) a un axe central (6), dans la direction orthogonalement à la face principale du composant de substrat (2), et que l'axe central (6) est arrangé coaxialement à l'axe central (7) d'un trou central (8) du composant de substrat (2).

5. Support optique de données (1) selon une des revendications 1 à 4, **caractérisé en ce que** l'étiquette RFID (3) est fixée dans l'évidement annulaire (4) au moyen d'une couche adhésive (9).

6. Support optique de données (1) selon une des revendications 1 à 4 dans la forme d'exécution comme CD, CDR, DVD, DVDR, Blu-ray disque, HD-DVD, et HD disque.

7. Support optique de données (1) selon une des revendications 1 à 6, **caractérisé en ce que** l'étiquette RFID (3) comprend une séquence unique de caractères d'identification, qui est différente pour des supports de données (1) différents, stockée dans un élément de mémoire, la séquence de caractères d'identification étant lisible par une unité de lecture RFID à partir de l'étiquette RFID (3), la séquence de caractères d'identification de préférence étant un numéro UID.

8. Procédé pour produire un support optique de données (1) selon une des revendications 1 à 5, dans lequel un évidement annulaire (4) et un évidement additionnel (4a) sont prévus dans un composant de substrat en forme de disque (2), et une étiquette RFID (3) est fixée dans l'évidement annulaire (4) de telle sorte, qu'une partie d'une puce (3a) de l'étiquette RFID (3) soit arrangée dans l'évidement additionnel (4a), ladite partie faisant saillie au-delà d'une surface de l'étiquette RFID (3).

9. Procédé selon la revendication 8, dans lequel l'étiquette RFID (3) est collée dans l'évidement annulaire (4).

10. Procédé selon la revendication 7 ou 8, dans lequel après la fixation de l'étiquette RFID (3) dans l'évidement (4), l'évidement annulaire (4) est recouvert, en particulier au moyen d'une couche de vernis (5), d'une couche d'impression (5') et/ou d'un film adhésif (5").
